Europäisches Patentamt

European Patent Office

Office européen des brevets

(11) Numéro de publication: **0 272 170 B1**

# (12) FASCICULE DE BREVET EUROPEEN

(45) Date de publication de fascicule du brevet:
24.04.91

(51) Int. Cl.⁵: **B25J 9/18**

(21) Numéro de dépôt: 87402509.1

(22) Date de dépôt: 06.11.87

(54) Procédé et dispositif de localisation de pieces.

(30) Priorité: **14.11.86 FR 8615838**

(43) Date de publication de la demande:
**22.06.88 Bulletin 88/25**

(45) Mention de la délivrance du brevet:
**24.04.91 Bulletin 91/17**

(84) Etats contractants désignés:
**BE CH DE GB IT LI NL**

(56) Documents cités:

PROCEEDINGS OF THE IECON'84 - 1984 IN-TERNATIONAL CONFERENCE ON INDUS-TRIAL ELECTRONICS, CONTROL AND INS-TRUMENTATION, Tokyo, Japan, 22-26 octobre 1984, "Industrial applications of microe-lectronics", vol. 1, pages 23-29, IEEE; G.L. MILLER et al.: "A review of robotics research at AT&T bell laboratories"

1985 IEEE INTERNATIONAL CONFERENCE ON ROBOTICS AND AUTOMATION, Saint-Louis, Missouri, 25-28 mars 1986, pages 282-287, IEEE, Computer Society Press; D.J. BALEK et al.: "Using gripper mounted infrared proximi-ty sensors for robot feedback control"

(73) Titulaire: **EUROSOFT ROBOTIQUE**
**1, Allée de la Venelle B.P. 145**
**F-92154 Suresnes Cédex(FR)**

(72) Inventeur: **Chataigner, Gabriel**
**3, Cité des Bruyères**
**F-85620 Rocheserviere(FR)**

(74) Mandataire: **Saint Martin, René et al**
**Régie Nationale des Usines Renault Direc-tion des Recherches et Développements Service 0804 8-10, Avenue Emile-Zola**
**F-92109 Boulogne Billancourt Cedex(FR)**

## Description

La présente invention est relative à un procédé et à un dispositif de localisation, dans un plan, de pièces destinées à être manipulées par un organe de préhension de robot.

Le problème de la détermination de la position et de l'orientation de pièces se pose pour la prise des pièces par un robot. Ainsi, un problème de ce type se pose dans une machine de report à plat de composants électroniques. Les tolérances dimensionnelles de fabrication des composants électroniques sont larges et les modes de conditionnement sont peu précis alors que le positionnement des composants électroniques sur le circuit imprimé doit être précis. On cherche soit à remettre le composant dans une position connue, soit à le localiser sur l'outil de préhension.

Pour localiser le composant, on a utilisé un capteur d'image qui permet, après un traitement informatique du type analyse d'image, de localiser le composant dans sa position et son orientation. Cette solution qui ne nécessite pas de mécanismes compliqués et qui n'endommage pas les composants électroniques a l'inconvénient d'être onéreuse en raison de la puissance de calcul nécessaire.

La présente invention a pour but de fournir un procédé et un dispositif de localisation ne présentant pas les inconvénients des dispositifs connus. L'invention est simple, n'abîme pas les pièces et son prix est faible. Elle permet de faire une analyse du contour de la pièce y compris son identification.

Le procédé selon l'invention est destiné à localiser des pièces dans un plan pour leur manipulation par un organe de préhension de robot et consiste à émettre un faisceau lumineux plan, à capter ce faisceau par un capteur fournissant un signal S1 représentatif de l'intensité lumineuse du faisceau, à traiter ce signal par une unité électronique de traitement et il est caractérisé par le fait qu'il consiste à capter une seconde partie du faisceau par un second capteur fournissant un signal S2 représentatif de l'intensité lumineuse reçue, à amener une pièce dans le faisceau, à la faire pivoter autour de l'axe de l'organe de préhension, à calculer des valeurs combinées des signaux S1 et S2 de manière à déterminer des valeurs de position de la pièce par rapport à l'organe de préhension et à commander le robot en fonction de ces valeurs de position.

Selon une caractéristique, le procédé consiste à calculer une valeur combinée S de S1 et S2 égale à la somme desdits signaux à faire tourner l'organe de préhension jusqu'à ce que ladite somme S soit maximale ou minimale, à calculer une première fois la différence D desdits signaux pour déterminer une première information de position de la pièce, à calculer une seconde fois, après avoir fait tourner la pièce de 90°, ladite différence D pour déterminer une seconde information de position de la pièce.

Le dispositif selon l'invention qui localise dans un plan des pièces pour leur manipulation par un organe de préhension de robot comporte un émetteur de faisceau lumineux plan coopérant avec un capteur linéaire de lumière recevant le faisceau plan et relié à une unité de traitement électronique et il est caractérisé par le fait que le capteur linéaire comprend deux photodétecteurs recevant chacun une partie du faisceau plan.

D'autres caractéristiques et avantages de la présente invention apparaîtront à la suite de la description qui va suivre du procédé et de modes d'exécution du dispositif en faisant application, donnés uniquement à titre d'exemples et représentés aux dessins annexés dans lesquels :

- la figure 1 représente un schéma de principe du dispositif selon l'invention,
- la figure 2 représente un schéma d'un premier mode de réalisation d'émetteur de faisceau lumineux utilisé dans le dispositif,
- la figure 3 représente un schéma d'un second mode de réalisation d'émetteur de faisceau lumineux,
- la figure 4 représente un premier mode de réalisation des capteurs de lumière utilisés dans le dispositif,
- la figure 5 représente un second mode de réalisation des capteurs de lumière utilisés dans le dispositif,
- la figure 6 représente la partie électronique du dispositif qui commande le robot équipé de l'organe de préhension,
- la figure 7 est un graphique illustrant le fonctionnement du dispositif

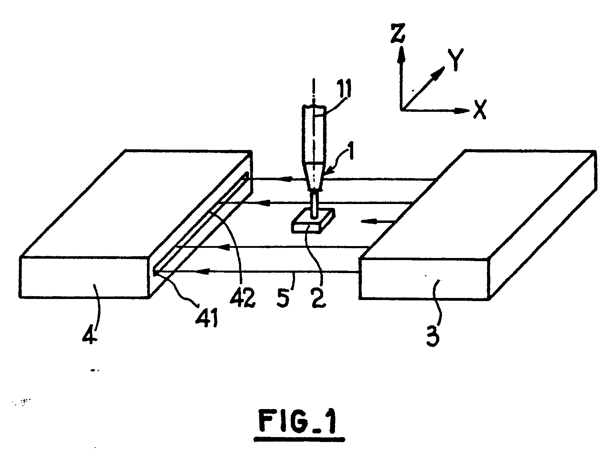

La figure 1 représente le schéma de principe du dispositif mettant en oeuvre le procédé selon l'invention. Le dispositif équipe un robot pourvu d'un organe de préhension 1 de robot qui sert à prendre des pièces 2 pour les déplacer dans un plan X-Y et perpendiculairement à X-Y suivant l'axe Z de manière à les positionner jusqu'à des endroits précis. Cet organe de préhension 1 peut pivoter autour d'un axe 11 parallèle à Z. De préférence, le plan X-Y est horizontal et l'organe de préhension se déplace selon un axe vertical. A titre indicatif, l'organe de préhension est constitué par une buse de préhension.

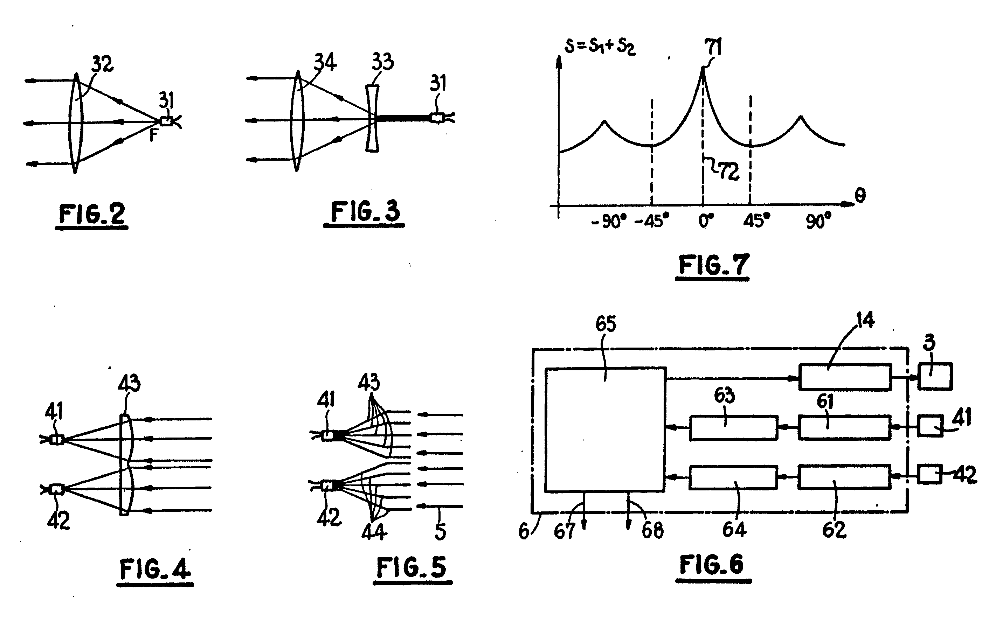

Le dispositif comporte un ensemble d'émission de lumière 3 fournissant un faisceau lumineux 5 ou un rideau lumineux plan dont les rayons sont parallèles au plan X-Y. Dans le mode de réalisation de la figure 2, l'émetteur 3 comporte une source lumineuse 31 émettant dans le domaine visible ou infrarouge et située au foyer de la lentille 32. Dans le mode de réalisation de l'émetteur de la figure 3, la source lumineuse 31 est une diode laser associée à une optique 33 élargissant le rayon laser et à une optique 34.

L'émetteur 3 coopère avec un capteur linéaire de lumière 4 présentant deux éléments récepteurs photo-électriques (photodétecteurs) 41 et 42 qui reçoivent l'un et l'autre une partie du faisceau lumineux 5. Ils reçoivent chacun une partie du faisceau plan 5.

Selon le mode de réalisation de la figure 4, deux photodétecteurs 41 et 42 (phototransistors, photodiodes) sont associés à une optique 43 séparant le faisceau 5 en deux demi-faisceaux, chaque demi-faisceau étant focalisé sur un photodétecteur.

Dans le mode de réalisation de la figure 5, chaque photodétecteur 41 ou 42 est associé un faisceau de fibres optiques repéré respectivement 43 et 44 dont les extrêmités recevant la lumière sont alignées dans le plan du faisceau 5.

Les photodétecteurs 41 et 42 fournissent des signaux représentatifs de l'intensité lumineuse reçue à une unité électronique de traitement 6. Celle-ci comporte des amplificateurs 61 et 62 qui, en entrée, reçoivent les signaux des photodétecteurs 41 et 42 et qui, en sortie, fournissent des signaux analogiques amplifiés à des convertisseurs analogiques-digitaux 63 et 64 respectivement. Les signaux de sortie des convertisseurs 63 et 64 sont envoyés à un circuit à microprocesseur 65 qui commande l'émetteur de lumière 3 par l'intermédiaire d'un circuit de puissance 14 et qui envoie par 67 des signaux de commande de la rotation $\theta$ de l'organe de préhension 1 et envoie par 68 des signaux représentatifs de la position de la pièce 2 au robot.

Le procédé selon l'invention comporte les étapes suivantes :

- La pièce (2) est saisie par l'organe de préhension (1) et elle est amenée dans le faisceau, au centre de celui-ci. Le photodétecteur 41 fournit un signal $S_1$ proportionnel à la quantité de lumière qu'il reçoit et de même le photodétecteur 42 fournit un signal S2 proportionnel à la quantité de lumière qu'il reçoit.
- On calcule la somme S = S1 + S2 des signaux fournis par les photodétecteurs 41 et 42.
- On fait pivoter l'organe de préhension 1 autour de l'axe 11 jusqu'à ce que le signal S = S1 + S2 soit maximal. Alors, l'axe de symétrie parallèle à la longeur (cas d'une pièce de forme rectangulaire) définit une première orientation de référence parallèle aux rayons lumineux. La figure 7 montre la courbe de variation du signal total S en fonction de l'orientation de la pièce avec le maximum principal 71. Cette méthode est valable dans une zone 72 correspondant à une erreur de prise de la pièce de + ou - 45°.

En variante, on pourrait faire pivoter l'organe de préhension 1 jusqu'à ce que le signal S = S1 + S2 soit minimal.

- Dans la première orientation de référence, on calcule la différence D = S1 - S2. Cette différence est directement proportionnelle au décalage de la pièce 2 par rapport à l'axe de l'organe de préhension 1 suivant l'un des axes de symétrie de la pièce (petit axe dans le cas où l'on oriente en fonction de S1 + S2).
- On fait pivoter l'organe de préhension 1 de 90°, ce qui induit une rotation correspondante de la pièce 2.
- On calcule de nouveau la différence D = S1 - S2. Cette seconde différence est directement proportionnelle au décalage de la pièce par rapport à l'axe de l'organe de préhension 1 selon le second axe de symétrie de la pièce (grand axe dans le cas où l'on oriente en fonction de S1 + S2).

Le procédé ainsi décrit est mis en oeuvre par le dispositif décrit plus haut, en particulier par l'unité électronique de traitement 6. Les informations de décalage de la pièce 2 calculées par l'unité de traitement 6 sont utilisées par celle-ci pour commander les déplacements corrigés du robot muni de l'organe de préhension 1.

L'unité à microprocesseur 6 est capable d'étalonner les capteurs afin de corriger les signaux en fonction des décalages de zéro et des variations de gain dues par exemple à des raisons thermiques ou de vieillissement et des défauts de linéarité des capteurs.

Le procédé et le dispositif selon l'invention s'appliquent en particulier à une machine de report à plat de composants électroniques.

## Revendications

1. Procédé de localisation de pièces (2) dans un plan (X,Y) pour leur manipulation par un organe de préhension (1) de robot, consistant à émettre un faisceau lumineux (5), plan, à capter ce faisceau par un capteur (41) fournissant un signal S1 représentatif de l'intensité lumineuse du faisceau, à traiter ce signal par une unité électronique de traitement (6), caractérisé par le fait qu'il consiste à capter une seconde partie du faisceau par un second capteur (42), fournissant un signal S2 représentatif de l'intensité lumineuse reçue, à amener une pièce (2) dans le faisceau, à la faire pivoter autour de l'axe (11) de l'organe de préhension (1), à calculer des valeurs combinées des signaux S1 et S2 de manière à déterminer des valeurs de position de la pièce (2) par rapport à l'organe de préhension (1) et à commander le robot en fonction de ces valeurs de position.

2. Procédé selon la revendication 1, caractérisé par le fait qu'il consiste à calculer une valeur combinée S de S1 et S2 égale à la somme desdits signaux à faire tourner l'organe de préhension jusqu'à ce que ladite somme S soit maximale ou minimale, à calculer une première fois la différence D desdits signaux pour déterminer une première information de position de la pièce (2), à calculer une seconde fois, après avoir fait tourner la pièce (2) de 90°, ladite différence D pour déterminer une seconde information de position de la pièce (2).

3. Dispositif de localisation dans un plan de pièces (2), pour leur manipulation par un organe de préhension (1) de robot, comportant un émetteur (3) d'un faisceau lumineux (5) plan coopérant avec un capteur linéaire (4) de lumière qui reçoit le faisceau plan (5) et est relié à une unité de traitement électronique (6), caractérisé par le fait que le capteur linéaire (4) comprend deux photodétecteurs (41, 42) recevant chacun une partie du faisceau plan, fournissant des signaux S1 respectivement S2, a fin de calculer des valeurs combinées des signaux S1 et S2 de manière à déterminer des valeurs de position de la pièce (2).

4. Dispositif selon la revendication 3 caractérisé par le fait que les photodétecteurs (41 et 42) sont associés à une optique (43) séparant le faisceau en deux demi-faisceaux.

5. Dispositif selon la revendication 3, caractérisé par le fait que chaque photodétecteur (41 ou 42) est associé à un faisceau (43 ou 44) de fibres optiques.

6. Dispositif selon l'une quelconque des revendications précédentes, caractérisé par le fait que l'unité électronique de traitement (6) comporte un circuit à microprocesseur (65) recevant les signaux des photodétecteurs (41 et 42) et commandant l'émetteur de lumière (3) et le robot.

## Claims

1. A process for locating parts (2) in a plane (X,Y) for the manipulation thereof by a robot gripping member (1) comprising emitting a flat light beam (5), sensing said beam by a sensor (41) which supplies a signal S1 which is representative of the light intensity of the beam, and processing said signal by an electronic processing unit (6) characterised in that it comprises sensing a second part of the beam by a second sensor (42) which supplies a signal S2 which is representative of the light intensity received, bringing a part (2) into the beam, causing it to pivot about the axis (11) of the gripping member (1), calculating combined values of the signals S1 and S2 so as to determine values in respect of position of the part (2) with respect to the gripping member (1) and controlling the robot in dependence on said position values.

2. A process according to claim 1 characterised in that it comprises calculating a combined value S of S1 and S2 which is equal to the sum of said signals, turning the gripping member until said sum S is at a maximum or at a minimum, calculating a first time the difference D between said signals to determine a first item of information in respect of position of the part (2), and calculating a second time, after having turned the part (2) through 90°, said difference D for determining a second item of information in respect of position of the part (2).

3. An apparatus for locating parts (2) in a plane for the manipulation thereof by a robot gripping member (1) comprising an emitter (3) for emitting a flat light beam (5) co-operating with a linear light sensor (4) which receives the flat beam (5) and is connected to an electronic processing unit (6) characterised in that the linear sensor (4) comprises two photodetectors (41, 42) which each receive a part of the flat beam, supplying signals S1 and S2 respectively in order to calculate combined values of the signals S1 and S2 so as to determine values in respect of position of the part (2).

4. Apparatus according to claim 3 characterised in that the photodetectors (41 and 42) are associated with an optical member (43) which separates the beam into two half-beams.

5. Apparatus according to claim 3 characterised in that each photodetector (41 or 42) is associated with a bundle (43 or 44) of optical fibres.

6. Apparatus according to any one of the preceding claims characterised in that the electronic processing unit (6) comprises a microprocessor circuit (65) for receiving the signals from the photodetectors (41 and 42) and controlling the light emitter (3) and the robot.

**Ansprüche**

1. Verfahren zur Lokalisierung von Teilen (2) in einer Ebene (x, Y) im Hinblick auf ihre Handhabung durch einen Roboterarm (1), wobei ein ebener Lichtstrahl (5) ausgesandt wird, dieser Lichtstrahl durch einen Fühler (41) aufgefangen wird, der ein Signal (S1) liefert, das die Lichtintensität des Strahls darstellt, dieses Signal durch eine elektronische Verarbeitungseinheit (6) verarbeitet wird, dadurch gekennzeichnet, daß ein Teil des Strahls durch einen zweiten Fühler (42) aufgefangen wird, der ein Signal (S2) liefert, das die empfangene Lichtintensität darstellt, daß ein Teil (2) in den Lichtstrahl geführt wird und um die Achse (11) des Greifarms (1) verschwenkt wird, daß die kombinierten Werte der Signale (S1 und S2) derart berechnet werden, daß die Positionen des Teils (2) bezüglich des Greifarms (1) festgelegt werden und daß der Roboter als Funktion dieser Positionen gesteuert wird.

2. Verfahren nach Anspruch 1, dadurch gekennzeichnet, daß ein kombinierter Wert S aus S1 und S2 berechnet wird, der gleich der Summe dieser Signale ist, daß der Greifarm so lange gedreht wird, bis die Summe S ein Maximum oder ein Minimum erreicht, daß ein erstes Mal die Differenz D der Signale berechnet wird, um so eine erste Positionsinformation des Teils (2) zu erhalten, daß ein zweites Mal nach einer Verdrehung des Teils (2) um 90° die Differenz D berechnet wird, um eine zweite Positionsinformation des Teils (2) zu erhalten.

3. Vorrichtung zur Lokalisierung in einer Ebene von Teilen (2) im Hinblick auf ihre Handhabung durch einen Robotergreifarm (1), mit einem Sender (3) für einen ebenen Lichtstrahl (5), der mit einem linearen Lichtfühler (4) zusammenwirkt, welcher den ebenen Strahl (5) empfängt und der mit einer elektronischen Verarbeitungseinheit (6) verbunden ist, dadurch gekennzeichnet, daß der lineare Fühler (4) zwei Fotodetektoren (41, 42) aufweist, deren jeder einen Teil des ebenen Strahls auffängt und welche die Signale S1 bzw. S2 liefern, um so die kombinierten Werte der Signale S1 und S2 dergestalt zu berechnen, daß die Positionswerte für das Teil (2) bestimmt werden können.

4. Vorrichtung nach Anspruch 3, dadurch gekennzeichnet, daß die Fotodetektoren (41 und 42) einer Optik (43) zugeordnet sind, welche den Strahl in zwei Halbstrahlen aufteilt.

5. Vorrichtung nach Anspruch 3, dadurch gekennzeichnet, daß jeder Fotodetektor (41 oder 42) einem Bündel (43 oder 44) aus optischen Fasern zugeordnet ist.

6. Vorrichtung nach einem der vorhergehenden Ansprüche, dadurch gekennzeichnet, daß die elektronische Verarbeitungseinheit (6) einen Mikroprozessorkreis (65) aufweist, welcher die von den Fotodetektoren (41 und 42) stammenden Signale erhält und der sowohl den Lichtsender (3) als auch den Roboter steuert.

**FIG.1**

EP 0 272 170 B1

FIG.2

FIG.3

FIG.7

FIG.4

FIG.5

FIG.6